Europäisches Patentamt

(19) European Patent Office

Office européen des brevets

(11) Veröffentlichungsnummer: **0 074 020**
**B1**

(12) **EUROPÄISCHE PATENTSCHRIFT**

(45) Veröffentlichungstag der Patentschrift:
**13.11.85**

(51) Int. Cl.⁴: **H 02 K 3/12**, H 02 K 3/28

(21) Anmeldenummer: **82107793.0**

(22) Anmeldetag: **25.08.82**

(54) Synchronmaschine.

(30) Priorität: **07.09.81 SE 8105291**

(43) Veröffentlichungstag der Anmeldung:
**16.03.83 Patentblatt 83/11**

(45) Bekanntmachung des Hinweises auf die Patenterteilung:
**13.11.85 Patentblatt 85/46**

(84) Benannte Vertragsstaaten:
**AT CH DE FR GB LI**

(56) Entgegenhaltungen:
**DE - C - 612 869**
**DE - C - 705 386**
**DE - C - 932 972**

(73) Patentinhaber: **ASEA AB, S-721 83 Västeras (SE)**

(72) Erfinder: **Eckorrot, Hans, Blomgatan 12 A,**
**S-752 31 Uppsala (SE)**
Erfinder: **Eriksson, Knut, Eriksgatan 15,**
**S-724 60 Västeras (SE)**
Erfinder: **Rothman, Bengt, Dipl.-Ing.,**
**Krongjutarvägen 16, S-730 50 Västeras (SE)**

(74) Vertreter: **Boecker, Joachim, Dr.-Ing.,**
**Rathenauplatz 2-8, D-6000 Frankfurt a.M. 1 (DE)**

**Beschreibung**

Die Erfindung betrifft eine Synchronmaschine gemäß dem Oberbegriff des Anspruches 1.

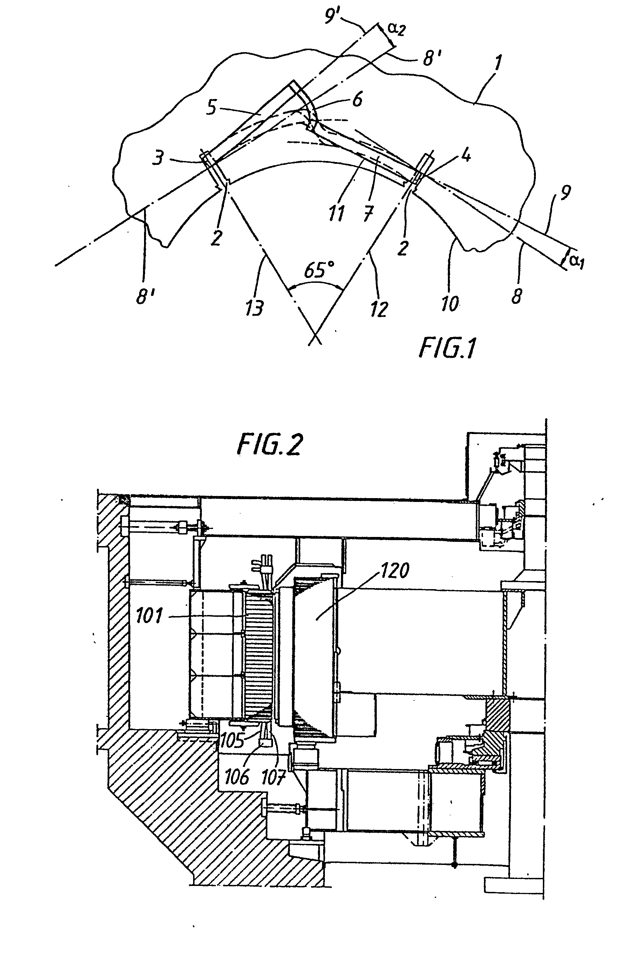

Auf Seite 123, Abb. 60 des Buches von H. Sequenz »Herstellung der Wicklungen elektrischer Maschinen« (Springer-Verlag/Wien 1973) wird eine ungeteilte Statorspule gezeigt, die in zwei radial nach innen gerichteten Nuten eines ringförmigen, für eine rotierende Wechselstrommaschine bestimmten Statorkerns angeordnet ist und die sich von der im Oberbegriff des Anspruches 1 genannten Spulenart dadurch unterscheidet, daß die beiden Spulenhälften integrierte Teile einer einheitlich hergestellten Spule sind und nicht mit Hilfe eines besonderen Verbindungsstückes miteinander verbunden sind. Die in dem genannten Buch beschriebene Spule ist in Fig. 1 durch gestrichelte Linien angedeutet.

Bei bekannten, aus zwei miteinander verbundenen Spulenhälften aufgebauten Spulen (US-PS 3 344 297) haben die beiden Spulenhälften im wesentlichen dieselbe Form wie die Hälften der obengenannten Spule aus dem Buch von Sequenz, während der Spulenrücken durch das obengenannte besondere Verbindungsstück ersetzt worden ist. Auf ähnliche Weise wie bei der Spule aus dem vorgenannten Buch ist jede der beiden in Reihe geschalteten Wickelkopfhälften derart ausgebildet, daß der radiale Abstand zum Luftspalt an der entsprechenden Wicklungsnut am kleinsten ist und dann mit zunehmendem axialem Abstand von der Stirnfläche des ringförmigen Statorkernes größer wird, wobei die maximale Abstandsvergrößerung bei der unteren Wicklungskopfhälfte größer als bei der oberen Wicklungskopfhälfte ist. Die radial nach außen gerichteten Flächen sämtlicher Oberspulenhälften und die radial nach innen gerichteten Flächen der Bodenspulenhälften liegen dabei in einer radial inneren bzw. in einer radial äußeren konischen Fläche, und die Spulen sind immer so geformt, daß diese Flächen im Verhältnis zueinander axial nach außen hin divergieren, was zur Erzielung einer ausreichenden Ventilation und einer genügenden Sicherheit gegen Überschlag notwendig ist.

Mit den herkömmlich geformten und angeordneten Spulenhälften ist es nicht möglich, eine Statorspule durch Verbindung zweier völlig gleicher Spulenhälften herzustellen. Der Grund hierfür liegt z.T. darin, daß die Wickelkopfhälften meistens gekrümmt sind, um der Krümmung des Statorkernes folgen zu können. Aber auch wenn die Krümmung der Wickelkopfhälften vernachlässigbar wäre, würde man wegen der Divergenz der genannten konischen Flächen zwei Spulenhälften unterschiedlicher Form benötigen.

Aus der DE-PS 932 972 ist eine Synchronmaschine der eingangs genannten Art mit geteiltem Ständerblechpaket bekannt. Die Wickelköpfe zumindest der die Trennfuge des Ständers übergreifenden Spulen sind so ausgebildet und zueinander angeordnet, daß für die Trennung der beiden Hälften des Ständers keine Spulen herausgenommen zu werden brauchen, sondern lediglich die Verbindungen zwischen den Wickelkopfhälften getrennt werden müssen. Die Wickelkopfhälften beider Spulenhälften sind dabei so gestaltet, daß sie sich in Umfangsrichtung über die gleiche Stecke erstrecken, die Verbindungsstelle also in der Mitte zwischen den beiden Spulenseiten liegt. Im übrigen sind die Oberspulenhälften und die Bodenspulenhälften unterschiedlich ausgebildet, so daß zur Herstellung einer Spule zwei verschiedene Spulenhälften erforderlich sind.

Der Erfindung liegt die Aufgabe zugrunde, eine Synchronmaschine der eingangs genannten Art zu entwickeln, bei der jede Statorspule aus zwei untereinander gleichen Spulenhälften aufbaubar ist und ein genügender radialer Abstand zwischen den Wickelkopfschichten erreichbar ist.

Zur Lösung dieser Aufgabe wird eine Synchronmaschine nach dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den Unteransprüchen genannt.

Anhand der in den Figuren gezeigten Ausführungsbeispiele soll die Erfindung näher erläutert werden. Es zeigt

Fig. 1 in partieller axialer Ansicht den Stator einer Synchronmaschine, bei welchem zwei Spulenhälften gemäß der Erfindung die eingangs genannte, bei H. Sequenz beschriebene Spule ersetzen. Die letztere wird durch gestrichelte Linien dargestellt,

Fig. 2 eine Synchronmaschine gemäß der Erfindung in einem partiellen Axialschnitt,

Fig. 3 einen Teil des Stators der Synchronmaschine gemäß Fig. 2 in axialer Ansicht,

Fig. 4 eine zu der Maschine nach Fig. 2 gehörende Spulenhälfte von der Mittellinie des Stators betrachtet und in einer radialen Ansicht auf den geraden in einer Wicklungsnut angeordneten Teil der Spulenhälfte,

Fig. 5 und 6 dieselbe Spulenhälfte im Schnitt und in einer Ansicht längs der Linie V-V bzw. VI-VI in Fig. 4,

Fig. 7 einen Schnitt längs der Linie VII-VII in Fig. 4,

Fig. 8 eine alternative Ausführungsform einer Spulenhälfte gemäß der Erfindung im Schnitt längs der Linie VIII-VIII in Fig. 4.

Fig. 1 zeigt einen Ausschnitt des Statorkerns 1 einer Synchronmaschine. Der Statorkern 1 hat eine radial nach innen gerichtete Luftspaltfläche 10 und ist mit mehreren gleichmäßig verteilten axialen, radial nach innen gerichteten Wicklungsnuten 2 versehen, von denen in der Figur nur zwei gezeigt sind. Die beiden Nuten 2 tragen zusammen eine Wicklungsspule, die ein am Boden der einen Wicklungsnut liegendes, gerades Bodenteil 3 sowie ein nahe der Öffnung der anderen Nut liegendes gerades Oberteil 4 enthält.

Außerhalb der einen Stirnfläche des Statorkerns 1 ist das gerade Bodenteil 3 über einen Wicklungskopf, der eine von dem geraden Bodenteil 3 ausgehende Wicklungskopfbodenhälfte 5 sowie eine von dem geraden Oberteil ausgehende Wicklungskopfoberhälfte 7 enthält, elektrisch mit dem geraden Oberteil 4 verbunden. Die beiden Wicklungskopfhälften 5 und 7 sind mittels einer Verbindungsanordnung 6 elektrisch miteinander verbunden. Jede Spulenhälfte ist aus mehreren transponierten, mit Teilleiterisolation versehenen, längs der ganzen Spulenhälfte verlaufenden Teilleitern aufgebaut. An dem anderen nicht dargestellten stirnseitigen Ende des Statorkerns ist die Spule mit einem ähnlichen Wicklungskopf wie dem beschriebenen versehen, wobei sich dieser Wicklungskopf peripher in der einen oder anderen Richtung in bezug auf den erstgenannten Wicklungskopf erstreckt, was davon abhängt, ob die Wicklung der Maschine als Wellenwicklung oder als Schleifenwicklung aufgebaut ist.

Die obere Wicklungskopfhälfte 7 liegt im ganzen radial innerhalb einer gedachten Ebene 8 und mit einem überwiegenden Teil ihrer radial nach außen gerichteten Fläche in einer gedachten Ebene 9. Die Ebene 8 steht senkrecht auf einer Axialebene mitten durch die Wicklungsnut hindurch, in der das gerade Oberteil 4 angeordnet ist. Die beiden Ebenen 8 und 9 schneiden sich längs einer axial verlaufenden Schnittlinie mit einem Schnittwinkel $\alpha_1$ von ungefähr 7°. Der radiale Abstand zwischen der Luftspaltfläche 10 und der radial nach innen gerichteten Fläche der Wicklungskopfoberhälfte 7 ist längs eines kleineren Teils der letztgenannten kleiner als der mittlere radiale Abstand zwischen dem geraden Oberteil 4 und der Luftspaltfläche 10. Die geraden Teile 3 und 4, die genau wie die übrigen Teile der Spulenhälften einen rechteckigen Querschnitt haben, liegen mit ihren Seitenflächen parallel zu den Nutwänden. Die Spulenhälfte, zu der die Teile 3 und 5 gehören, ist, wenn man von Formunterschieden absieht, die in normalem Fertigungstoleranzbereich liegen, kongruent mit der Spulenhälfte, zu der die Teile 4 und 7 gehören. Wenn 9' eine Ebene bezeichnet, die praktisch mit der ganzen radial nach innen gerichteten Fläche der Wicklungskopfhälfte 5 zusammenfällt, so bedeutet dies, daß der Winkel $\alpha_2$ zwischen der Ebene 8' und der Ebene 9' gleich oder nahezu gleich dem Winkel $\alpha_1$ zwischen den Ebenen 8 und 9 ist, wenn die Ebene 8' senkrecht zu einer Axialebene durch den Mittelpunkt des geraden Bodenteils 3 liegt und sich die Ebenen 9' und 8' längs einer axial verlaufenden Schnittlinie schneiden.

Bei dem in Fig. 1 gezeigten Stator ist der von der Spule umfaßte Bogen verhältnismäßig groß. Eine Wicklungsspule nach der Erfindung ist vorteilhafter, wenn dieser Bogen wesentlich kleiner ist, weshalb eine Synchronmaschine nach der Erfindung vorzugsweise mindestens zehn Pole hat. Die in den Fig. 2 bis 8 gezeigte Maschine hat einen Rotor 120, der vierzig ausgeprägte Pole hat.

In den Fig. 2 bis 8 haben die Bezugszeichen 101, 102, 103 usw. dieselbe Bedeutung wie die Bezugszeichen 1, 2, 3 usw. in Fig. 1.

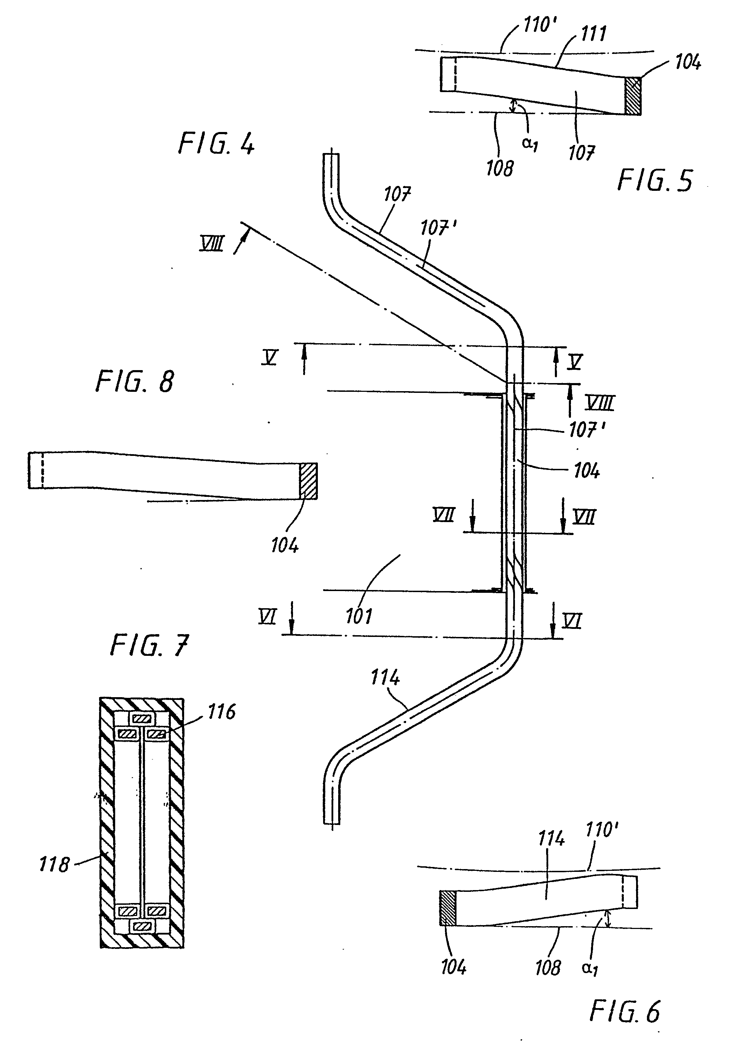

Bei der gezeigten Maschine besteht jede obere Spulenhälfte aus einem Bündel transponierter, gegeneinander isolierter Teilleiter 116 (Fig. 7). Das Bündel ist von der Spulenisolation 118 umgeben. Das Teilleiterbündel bildet ein gerades Oberteil 104 sowie zwei auf je einer Seite des Statorkerns angeordnete Wicklungskopfoberhälften 107 bzw. 114 (Fig. 4). Hiervon liegt jede mit einem überwiegenden Teil ihrer radial nach außen gerichteten Fläche in einer Ebene 109, die einen Winkel $\alpha_1$ mit einer Ebene 108 bildet, die senkrecht zur Axialebene 112 durch den Mittelpunkt des geraden Oberteils 104 steht und diese Axialebene längs einer axial gerichteten Schnittlinie schneidet. Alternativ kann die Spulenhälfte derart aufgebaut werden, daß jede Wicklungskopfoberhälfte mit einem überwiegenden Teil ihrer radial nach außen gerichteten Fläche in einer Ebene liegt, deren Schnittlinie mit der Ebene 108 nicht exakt axial gerichtet ist, jedoch im wesentlichen in axialer Richtung verläuft, beispielsweise so, wie es in Fig. 8 gezeigt ist, wo die betreffende Schnittlinie eine Normale zu der schräggestellten Ebene der Schnittfläche längs der Linie VIII-VIII in Fig. 4 ist.

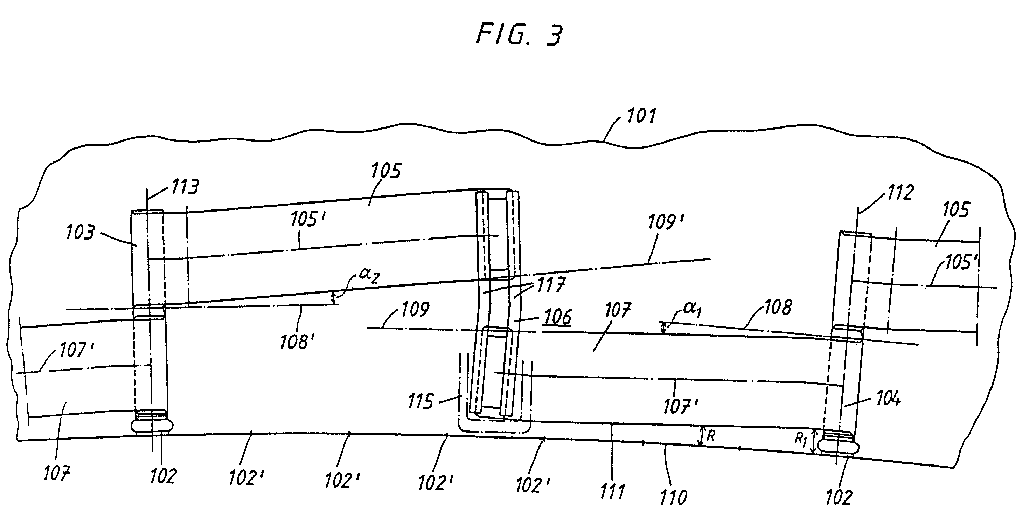

Jede der in Fig. 3 gezeigten Spulenhälften ist gemäß den Fig. 4, 5 und 6 aufgebaut, was bedeutet, daß die Bodenspulenhälfte jeder Spule kongruent oder nahezu kongruent mit der Oberspulenhälfte der Spule ist. Die beiden Hälften sind in jeder Spule mit Hilfe einer Verbindungsanordnung 106 miteinander verbunden, die zwei Verbindungsschienen 117 enthält, welche zwischen den Endpunkten der Wicklungskopfhälften durch Hartlöten befestigt sind, wobei entsprechende Abschnitte der Spulenisolierung 118 und der Teilleiterisolierung entfernt sind. An den Stirnflächen jeder Spulenhälfte sind die Teilleiter 116 durch Hartlöten miteinander verbunden. Die Verbindungsanordnung 106 ist von einer in Fig. 3 durch eine strichpunktierte Linie angedeuteten Isolierkappe 115 umgeben.

Jede der beiden Verbindungsschienen 117 ist in der Mitte gebogen. Alternativ kann man gerade Schienen verwenden, wobei eine solche Drehung an den Endabschnitten der beiden zu demselben Wicklungskopf gehörenden Wicklungskopfhälften vorgenommen wird, daß eine Anpassung an ein gerades Verbindungsorgan erreicht wird. Die Drehung kann zur Folge haben, daß die beiden miteinander verbundenen Spulenhälften eigentlich nicht länger untereinander kongruent sind. Wenn man jedoch bei jeder Hälfte eine Mittellinie betrachtet, die durch die Mittelpunkte sämtlicher Querschnitte verläuft, so wird eine solche Mittellinie der einen Spulenhälfte immer noch mit einer Mittellinie der anderen Spulenhälfte kongruent sein. In Fig. 3 sind zwei solche miteinander kongruente Mittellinien mit 105' bzw. 107' bezeichnet. Statt der in Fig. 3 gezeigten Verbindungsanordnung kann eine dreiteilige Verbindungsanordnung verwendet werden, die aus zwei Endteilen und einem Zwischenteil besteht, wobei die beiden Endteile zuerst mit je einer Wicklungskopfhälfte verbunden werden und das Zwischenteil schließlich die beiden Endteile miteinander verbindet.

Bei den in Fig. 3 gezeigten Spulen ist das maximale radiale Maß bei den geraden Teilen 103 und 104 etwas größer als bei den übrigen Spulenteilen, was daran liegt, daß die geraden Teile als Roebelstäbe ausgeführt sind. Aus Fig. 4 geht hervor, daß sich die geraden Teile der Spulenhälfte in axialer Richtung etwas über die Wicklungsnut 102 hinaus erstrecken. Der Begriff »Wicklungskopfhälfte« bezieht sich in dem vorliegenden Text auf den ganzen aus Teilleitern zusammengesetzten Spulenteil, der mit einem geraden Spulenteil integriert und axial außerhalb desselben angeordnet ist. Bei jeder Wicklungskopfhälfte 107 und 114 liegt zweckmäßigerweise ein überwiegender Teil, vorzugsweise mindestens 60%, der radial nach außen gerichteten Fläche, in der Ebene 109, und jede Wicklungskopfhälfte tangiert die Ebene 109 längs eines überwiegenden Teils ihrer Länge.

Die Wicklungskopfhälfte 107 hat eine radial nach innen gerichtete Fläche 111. In Fig. 3 ist der radiale Abstand zwischen der Luftspaltfläche 110 des Stators und einem Punkt auf der Fläche 111 allgemein mit R bezeichnet, während der maximale radiale Abstand zwischen der Luftspaltfläche 110 und der radial nach innen gerichteten Fläche des geraden Teils 104 mit $R_1$ bezeichnet ist. Der Abstand R ist kleiner als $R_1$ und auch kleiner als der durchschnittliche Abstand zwischen der Luftspaltfläche 110 und dem geraden Teil 104 längs eines überwiegenden Teils der Wicklungskopfhälfte 107, vorzugsweise längs mindestens 70% derselben.

Auch in Fig. 3 ist $\alpha_2 = \alpha_1$. Normalerweise sind die Winkel $\alpha_2$ und $\alpha_1$ größer als 1,5°, vorzugsweise größer als 2° und kleiner als 7°.

In den Fig. 5 und 6 bezeichnet 110' eine gedachte axiale Verlängerung der Luftspaltfläche 110.

**Patentansprüche**

1. Synchronmaschine für Betriebsspannungen von mindestens 1000 V mit einem Rotor (120) sowie einen diesen umschließenden ringförmigen Statorkern (1; 101), der axial verlaufende, radial nach innen gerichtete Wicklungsnuten (2; 102) hat, in welchen eine Wicklung angeordnet ist, die aus Spulenhälften mit rechteckigem Querschnitt und mehreren gegeneinander isolierten, längs der ganzen Spulenhälfte verlaufenden Teilleitern (116) zusammengesetzt ist, wobei jede Spule eine Bodenspulenhälfte mit einem am Boden einer Wicklungsnut liegenden geraden Bodenteil (3; 103) sowie eine Oberspulenhälfte mit einem nahe der Nutenöffnung einer anderen Wicklungsnut liegenden geraden Oberteil (4; 104) enthält und wobei die geraden Teile an den Statorenden durch je einen Wicklungskopf miteinander verbunden sind, der eine Wicklungskopfbodenhälfte (5; 105) und eine mit dieser über eine besondere Verbindungsanordnung (6; 106) in Reihe geschaltete Wicklungskopfoberhälfte (7; 107) enthält, dadurch gekennzeichnet, daß die Oberspulenhälften und die Bodenspulenhälften oder zumindest die Mittellinien (105', 107') mitten durch sämtliche Querschnitte der genannten Spulenhälften untereinander gleich sind und daß der radiale Abstand (R) zwischen der Luftspaltfläche (10; 110) des Stators und der radial nach innen gerichteten Fläche (11; 111) der Wickelkopfoberhälfte (7; 107) zumindest für einen Teil der Wickelkopfoberhälfte (7; 107) kleiner als der durchschnittliche radiale Abstand zwischen der Luftspaltfläche und der nach innen gerichteten Fläche des genannten geraden Oberteils ist.

2. Synchronmaschine nach Anspruch 1, dadurch gekennzeichnet, daß der radiale Abstand (R) zwischen der Luftspaltfläche (110) des Stators und der radial nach innen gerichteten Fläche (111) der Wickelkopfoberhälfte (107) über mindestens 70% der Länge der Wickelkopfoberhälfte (107) kleiner als der durchschnittliche radiale Abstand zwischen der Luftspaltfläche und der radial nach innen gerichteten Fläche (111) des genannten geraden Oberteils ist.

3. Synchronmaschine nach einem der vorhergehenden Ansprüche, dadurch gekennzeichnet, daß die Wickelkopfoberhälfte (7; 107) mit einem überwiegenden Teil ihrer radial nach außen gerichteten Fläche radial innerhalb einer gedachten ersten Ebene (8; 108) liegt, die die radial nach außen gerichtete Fläche des geraden Oberteils (4; 104) tangiert und senkrecht auf einer Axialebene (12; 112) durch den Mittelpunkt des geraden Oberteils steht, daß die Wickelkopfoberhälfte (7; 107) mit einem überwiegenden Teil ihrer radial nach außen gerichteten Fläche in einer zweiten gedachten Ebene (9; 109) liegt, die die erste Ebene (8; 108) längs einer im wesentlichen axial verlaufenden Schnittlinie unter einem ersten Winkel ($\alpha_1$) schneidet, daß die Wickelkopfbodenhälfte (5; 105) mit einem überwiegenden Teil ihrer radial nach innen gerichteten Fläche radial außerhalb einer gedachten ersten Ebene (8'; 108') liegt, die die radial nach innen gerichtete Fläche des geraden Bodenteils (3; 103) tangiert und senkrecht auf einer Axialebene (13; 113) durch den Mittelpunkt des geraden Bodenteils steht, daß die Wickelkopfbodenhälfte (5; 105) mit einem überwiegenden Teil ihrer radial nach innen gerichteten Fläche in einer zweiten gedachten Ebene (9'; 109') liegt, die die erste Ebene (8'; 108') längs einer im wesentlichen axial verlaufenden Schnittlinie unter einem zweiten Winkel ($\alpha_2$) schneidet, und daß die genannten beiden Winkel ($\alpha_1$, $\alpha_2$) gleich oder nahezu gleich groß sind.

4. Synchronmaschine nach Anspruch 1, dadurch gekennzeichnet, daß die Winkel ($\alpha_1$ und $\alpha_2$) im Bereich von 1,5 bis 7° liegen.

5. Synchronmaschine nach einem der vorhergehenden Ansprüche, dadurch gekennzeichnet, daß sie mindestens zehn Pole hat.

## Claims

1. Synchronous machine for operating voltages of at least 1000 V with a rotor (120) and an annular stator core (1; 101) surrounding said rotor and having axially extending and radially inwardly directed winding slots (2; 102) in which a winding is arranged consisting of coil halves of rectangular cross-section and a plurality of strands (116) extending along the entire coil half and being insulated from each other, whereby each coil comprises a bottom coil half with a straight bottom portion (3; 103) located at the bottom of a winding slot as well as a top coil half with a straight top portion (4; 104) located near the slot opening of another winding slot, and whereby said straight portions are connected with one another at the stator ends by an end connection comprising an end connection bottom half (5; 105) and an end connection top half (7; 107) the end connection halves being connected in series via a special connecting device (6; 106), characterized in that said top coil halves and said bottom coil halves or at least the centre lines (105', 107') extending straight through all cross-sections of said coil halves are identical, and that the radial distance (R) between the air gap surface (10; 110) of the stator and the radially inwardly facing surface (11; 111) of the end connection top half (7; 107) is — at least for a part of the end connection top half (7; 107) — smaller than the average radial distance between the air gap surface and the inwardly directed surface of said straight top portion.

2. Synchronous machine according to claim 1, characterized in that the radial distance R between said air gap surface (110) of the stator and said radially inwardly facing surface (111) of said end connection top half (107) is — for at least along 70% of the length of said end connection top half (107) — smaller than the average radial distance between the air gap surface (110) and the radially inwardly facing surface (111) of said straight top portion.

3. Synchronous machine according to any of the preceding claims, characterized in that said end connection top half (7; 107) is located with a predominant portion of its radially outwardly facing surface at the inner side of a first mathematical plane (8; 108) being tangent to the radially outwardly facing surface of the straight top portion (4; 104) and perpendicular to an axial plane (12; 112) through the mid-point of said straight top portion, that said end connection top half (7; 107) with a predominant portion of its radially outwardly facing surface is located in a second mathematical plane (9; 109) which intersects said first mathematical plane (8; 108) along a substantially axially extending intersectional line at a first angle ($\alpha_1$), that the end connection bottom half (5; 105) with a predominant portion of its radially inwardly facing surface is located radially outwardly of an first mathematical plane (8'; 108'), which is tangent to the radially inwardly facing surface of the straight bottom portion (3; 103) and perpendicular to an axial plane (13; 113) through the mid-point of said straight bottom portion, that the end connection bottom half (5; 105) with a predominant portion of its radially inwardly facing surface extends in a second mathematical plane (9'; 109'), which intersects said first plane (8'; 108) along a substantially axially extending intersectional line at a second angle ($\alpha_2$), and that both said angles ($\alpha_1$, $\alpha_2$) are equal or approximately equal.

4. Synchronous machine according to claim 1, characterized in that said angles ($\alpha_1$ and $\alpha_2$) are between 1.5 and 7°.

5. Synchronous machine according to any of the preceding claims, characterized in that it comprises at least ten poles.

## Revendications

1. Machine synchrone pour des tensions de fonctionnement d'au moins 1000 V, avec un rotor (120) ainsi que, entourant ce dernier, un noyau statorique de forme annulaire (1; 101) possédant des encoches pour le bobinage (2; 102), s'étendant axialement et dirigées radialement vers l'intérieur et dans lesquelles est disposé un bobinage qui est constitué par des moitiés de bobines de section transversale rectangulaire et par plusieurs conducteurs partiels (116) isolés les uns par rapport aux autres et s'étendant le long de la totalité de la moitié de bobine, du type dans laquelle chaque bobine comporte une moitié de bobine de fond, avec une partie de fond droit (3; 103) située dans le fond d'une encoche de bobinage, ainsi qu'une moitié de bobine supérieure avec une partie supérieure droite (4; 104) se situant près de l'ouverture d'encoche d'une autre encoche de bobinage, et dans laquelle les parties droites sont reliées, aux extrémités du stator, par une tête de bobine qui comporte une moitié de fond de tête de bobine (5; 105) et une moitié supérieure de tête de bobine (7; 107) reliée en série à la moitié du fond de tête de bobine à l'aide d'un dispositif de conection particulier (6; 106) caractérisé par le fait que les moitiés supérieures des bobines et les moitiés de fond des bobines, ou au moins les lignes médianes (105', 107') passant par le milieu de toutes les sections transversales desdites moitiés de bobine, sont égales entre elles, et que la distance radiale (R) entre la surface de l'entrefer (10; 110) du stator et la surface (11; 111), dirigée radialement vers l'intérieur, de la moitié supérieure (7; 107) de la tête de bobine est, pour au moins une partie de la moitié supérieure (7; 107) de la tête de bobine, inférieure à la distance radiale moyenne entre la surface de l'entrefer et la surface dirigée vers l'intérieur dudit élément supérieur droit.

2. Machine synchrone selon la revendication 1, caractérisé par le fait que la distance radiale (R) entre la surface de l'entrefer (110) du stator et la surface (111), dirigée radialement vers l'intérieur, de la moitié de tête de bobine supérieure (107) est, sur au moins 70% de la longueur de la moitié de la tête de bobine supérieure (107), plus petite que la distance radiale moyenne entre la surface de l'entrefer et la surface (111) dirigée radialement vers l'intérieur de ladite partie supérieure droite.

3. Machine synchrone selon l'une des revendications précédentes, caractérisé par le fait que la moitié de tête de bobine supérieure (7; 107) se situe, avec une partie prépondérante de sa surface dirigée radialement vers l'extérieur, radialement dans un premier plan imaginaire (8; 108) qui est tangent à la partie supérieure droite (4; 104) dirigée radialement vers l'extérieur, et perpendiculaire à un plan axial (12; 112) passant par le point médian de la partie supérieure droite, que la moitié de tête de bobine supérieure (7; 107) se situe avec une partie prépondérante de sa surface dirigée radialement vers l'extérieur, dans un second plan imaginaire (9; 109) qui coupe, sous un premier angle ($\alpha_1$), le premier plan (8; 108) le long d'une ligne de coupe qui s'étend esentiellement dans le sens axial, que la moitié de fond (5; 105) de la tête de bobine se situe, avec une partie prépondérante de sa surface radiale dirigée vers l'intérieur, en dehors d'un premier plan imaginaire (8'; 108') qui est tangent à la surface, dirigée radialement vers l'intérieur, de la partie de fond droite (3; 103) et est perpendiculaire à un plan axial (13; 113) passant par le point médian de la partie de fond droite, que la moitié de fond (5; 105) de la tête de bobine se situe avec une parie prépondérante de sa surface dirigée radialement vers l'intérieur, dans un second plan imaginaire (9'; 109') qui coupe, sous un second angle ($\alpha_2$), le premier plan (8'; 108') le long d'une ligne de coupe qui s'étend essentiellement dans le sens axial, et que les deux angles ($\alpha_1$, $\alpha_2$) susmentionnés sont égaux ou sensiblement égaux.

4. Machine synchrone selon la revendication 1, caractérisé par le fait que les angles ($\alpha_1$ et $\alpha_2$) se situent dans une plage de 1,5 à 7°.

5. Machine synchrone selon l'une des revendications précédentes, caractérisé par le fait qu'elle comporte au moins dix pôles.

FIG.1

FIG.2

FIG. 3

FIG. 4

FIG. 5

FIG. 8

FIG. 7

FIG. 6